# EUROPÄISCHE PATENTSCHRIFT

(11) **EP 1 076 078 B1**
(45) Veröffentlichungstag und Bekanntmachung des Hinweises auf die Patenterteilung: **13.10.2004**
(21) Anmeldenummer: 00115808.8
(22) Anmeldetag: 22.07.2000
(51) Int. Cl.: C08L 83/04, D06M 15/643, D06M 15/55, C08L 83/08

(54) **Silikonhaltige Zusammensetzungen für die Behandlung von Wollematerialien**
Polysiloxane compositions for wool treatment
Compositions d'organopolysiloxanes pour le traitement de laines

(30) Priorität: 07.08.1999 DE 19937477
(43) Veröffentlichungstag der Anmeldung: 14.02.2001
(73) Patentinhaber: Ciba Spezialitätenchemie Pfersee GmbH, 86462 Langweid a.L. (DE)
(72) Erfinder: Lüdemann, Simpert, 86399 Bobingen (DE); Chrobaczek, Harald, Dr., 86153 Augsburg (DE); Angele, Theodor, 86637 Wertingen (DE); Riedmann, Jürgen, 86356 Steppach (DE)

(56) Entgegenhaltungen:
- EP-A- 1 013 687
- DE-A- 1 444 062
- FR-A- 1 395 051
- GB-A- 1 220 587
- GB-A- 2 082 215

## Beschreibung

Die Erfindung betrifft Zusammensetzungen, welche spezielle Organopolysiloxane und Umsetzungsprodukte aus Diepoxiden und Diaminen enthalten. Sie betrifft ferner die Verwendung solcher Zusammensetzungen zur Behandlung von Fasermaterialien, insbesondere Wolle enthaltenden oder aus Wolle bestehenden textilen Fasermaterialien.

Es ist bekannt, Wolle enthaltende Materialien mit Zusammensetzungen zu behandeln, welche Polymere enthalten, um das Verfilzen und den Schrumpf der Wolle bei Waschvorgängen zu verhindern oder zu reduzieren. Als Polymere wurden hierzu unter anderem Polyurethane verwendet. Der Nachteil einer alleinigen Verwendung von Polyurethanen für die sog. Filzfreiausrüstung von Wolle besteht darin, daß in vielen Fällen, vor allem bei Ausrüstung bestimmter Wollqualitäten, eine deutliche Verschlechterung des Griffniveaus resultieren kann.

Um den Schrumpf von Wolle und damit auch die Neigung zur Verfilzung bei Waschprozessen zu verringern, wurden auch bereits Silikone verwendet. Durch Auswahl geeigneter Organopolysiloxane gelingt es, den Griff ausgerüsteter Wollartikel gegenüber einer Behandlung mit Polyurethanen zu verbessern. Auch die Verwendung von Organopolysiloxanen, welche Aminogruppen enthalten, zur Ausrüstung von Fasermaterialien ist bekannt, insbesondere in denjenigen Fällen, wo ein weicher Griff der Materialien angestrebt wird.
Werden für die Wollausrüstung Zusammensetzungen verwendet, die ausschließlich linear aufgebaute Organopolysiloxane enthalten, also Silikone, die nicht vernetzt und nicht vernetzbar sind, so ist der Effekt der Filzfrei- bzw. Schrumpffestausrüstung vielfach nicht ausreichend. So hat sich beispielsweise gezeigt, daß mit Zusammensetzungen, welche nur Polydialkylsiloxane enthalten oder Polydialkylsiloxane mit endständigen Hydroxygruppen, das geforderte Effektniveau nicht zu erreichen ist. Um dieses Problem zu lösen, wurde bereits versucht, Zusammensetzungen zu verwenden, die außer linearen Polysiloxanen noch vernetzbare Silane oder Siloxane enthalten. Diese zu Vernetzung führenden Verbindungen enthalten Siliciumatome mit drei oder vier reaktiven Gruppen; Beispiele hierfür sind Alkyltrisalkoxysilane. Diese vemetzenden Verbindungen können in lineare Polydialkylsiloxane oder endständige Dihydroxypolydialkylsiloxane unter Bildung vernetzter Strukturen eingebaut werden. Durch den Zusatz solcher vemetzender, trifunktionelle Si-Atome enthaltender, Verbindungen läßt sich der Effekt der Filzfreiausrüstung von Wolle verbessern. Es hat sich jedoch gezeigt, daß das Niveau dieser Ausrüstung in einer Reihe von Fällen noch nicht optimal ist, wenn mit Systemen gearbeitet wird, die erst nach dem Aufbringen auf die Wollartikel vernetzen und vorher keine Vernetzung aufweisen, also keine Einheiten der unten genannten Formel (III) enthalten.
Im Fall der Verwendung von Alkylwasserstoffpolysitoxanen in vemetzenden Systemen ergibt sich das Problem, daß Sicherheitsvorkehrungen wegen der möglichen Freisetzung von Wasserstoff getroffen werden müssen. Wegen der mit den genannten Zusammensetzungen auftretenden Probleme werden auch bereits Silikone auf dem Markt angeboten, welche schon zu einem gewissen Grad vernetzt, aber noch weiter vernetzbar sind. Solche Polysiloxane enthalten neben difunktionellen -SiR₂O- Einheiten (R = Alkyl) auch trifunktionelle Gruppierungen, in denen je 3 Sauerstoffatome an ein oder mehrere Si-Atome gebunden sind. Die endständigen Siliciumatome der Polysiloxanketten können hierbei noch OH- oder OR-Gruppen tragen, wodurch eine weitere Vernetzbarkeit gegeben ist. Mit solchen bereits vorvemetzten Polysiloxanen, die noch weiter vernetzbar sind, lassen sich in manchen Fällen bereits bessere Effekte einer Filzfreiausrüstung von Wollartikeln erzielen als mit unvernetzten Silikonen. Jedoch ist auch gegenüber solchen Systemen noch eine Verbesserung wünschenswert.

Die Behandlung von aus Wolle bestehenden bzw. Wolle enthaltenden textilen Fasermaterialien mit Silikonen ist in einer Reihe von Druckschriften erwähnt, z.B. in der DE-A 31 49 680, wo ein zweistufiges Verfahren beschrieben wird, bei dem ein Aminoalkylgruppen enthaltendes Polysiloxan verwendet werden kann, ggf. unter Zusatz einer vernetzenden Verbindung.
Die GB-A 2 082 215 beschreibt ein Verfahren zur Behandlung von Textilien aus Wolle, bei dem eine Zusammensetzung aus Methylwasserstoffpolysiloxan und einem Reaktionsprodukt aus Epoxidharz und mehrwertigem Amin verwendet wird.
Aus der DE-A 30 14 675 geht ein Verfahren zur Behandlung von Textilmaterial mit vernetzbaren Polysiloxanen hervor. Bei diesem Verfahren wird das Fasermaterial mit einem noch nicht vernetzten Silikon und einem als Vernetzungsmittel fungierenden Silan behandelt.
Die DE-A 29 03 334 beschreibt Zusammensetzungen zum Schrumpffestmachen von Wolle. Hierbei werden Silikone verwendet, welche Siliciumatome enthalten, an die je 3 Sauerstoffatome gebunden sind. Die Silikone enthalten ferner anionische Gruppen.
Der DE 27 26 108 ist ein Verfahren zu entnehmen, mit dem Zubereitungen zum Schrumpffestmachen von Wolle hergestellt werden können. Hierbei werden Polysiloxandiole mit Aminodioder trialkoxysilanen gemischt.
Die GB-Patentschrift 1 436 694 behandelt Siloxan/Silan-Mischungen für die Behandlung von Wollfasermaterialien.
Aus der CH-Patentschrift 573 505 sind Zusammensetzungen für die Filzfrei-Ausrüstung von Wolle bekannt. Diese Zusammensetzungen enthalten Umsetzungsprodukte von Epoxiden mit basischen Polyamiden. Verwendet man diese Zusammensetzungen nicht zur Behandlung von Wolle, sondern zur wasserabweisenden Ausrüstung anderer Textilfasern, so können sie gemäß den Aussagen dieser Schrift mit Silikonöl kombiniert werden.
Die US-Patentschrift 3 876 459 beschreibt Gemische aus Siloxan und Silan, die teilweise bereits miteinander reagiert haben können, für die Wolleausrüstung.
Aus der DE-A 19 38 555 sind Zubereitungen aus Umsetzungsprodukten von Epoxiden mit Polyamiden bekannt, welche sich für Filzfreiausrüstung von Wolle eignen. Verwendet man sie für einen anderen Zweck, nämlich zur wasserabweisenden Ausrüstung anderer Fasern, so können sie mit Silikonölen kombiniert werden.
Gegenstand der DE-A 22 53 939 sind Umsetzungsprodukte aus Epoxid, Epoxysilikon und Fettamin, die ausschließlich mit Dicarbonsäure oder Polyamidoamin weiter umgesetzt werden. Sie werden für Filzfreiausrüstung von Wolle verwendet.
Die US-Patentschrift 5 236 465 beschreibt härtbare Zusammensetzungen aus Polysiloxan und Aminosilan für die Schrumpffestausrüstung von Wolle. Um zufriedenstellende Effekte zu erhalten, muß die Wolle hierbei vor der Ausrüstung einer Oberflächenoxidation unterzogen werden.
Auch die EP-A 315 477 behandelt Silikon enthaltende Mischungen für die Ausrüstung von Wolle. Das Verfahren erfordert ebenfalls eine vorhergehende oxidative Behandlung der Wolle.
Die DE-A 28 44 952 beschreibt Zubereitungen zum Schrumpffestmachen von Wolle. Diese enthalten Polysiloxane mit Mercaptogruppen. Schwefel in der Oxidationsstufe -2 enthaltende Verbindungen haben den Nachteil, daß bei ihrer Herstellung und Anwendung, insbesondere unter Hitzeeinwirkung, Geruchsbelästigung und Bildung flüchtiger toxischer Verbindungen auftreten können.
Beim Verfahren der DE-A 28 04 983 wird auf Wolle ein Polymer aufgebracht und dann mit ionisierender Strahlung ausgehärtet. Das Polymer kann ein Polysiloxan sein.
Aus der DE-A 27 25 714 sind Silikonemulsionen für die Behandlung von Keratinfasem bekannt. Die Emulsionen enthalten Polydiorganosiloxan, ein Organosiloxan mit SiH-Bindungen, Emulgator und Na- oder Mg-Sulfat.
Die DE-A 23 65 977 beschreibt Zusammensetzungen zur Behandlung von Keratinfasern, welche ein Organopolysiloxan mit endständigen Hydroxygruppen und bestimmte tri- oder tetrafunktionelle Silane oder deren Kondensate bzw. Teilhydrolysate enthalten.

Die Aufgabe, die der vorliegenden Erfindung zugrundelag, bestand darin, eine verbesserte Zusammensetzung für die Behandlung von Fasermaterialien zur Verfügung zu stellen, insbesondere für die Behandlung textiler Flächengebilde, welche Wolle enthalten oder aus Wolle bestehen. Diese verbesserte Zusammensetzung sollte es ermöglichen, daß die damit behandelten Wollematerialien eine wesentlich verringerte Neigung zum Verfilzen bzw. eine deutlich verringerte Schrumpfung bei Waschvorgängen besitzen als unbehandelte Wollematerialien und daß diese Wollematerialien nach Waschvorgängen einen angenehm weichen Griff aufweisen.

Die Aufgabe wurde gelöst durch eine Zusammensetzung, welche mindestens folgende Komponenten A und B enthält:
A) ein Organopolysiloxan, dessen endständige Gruppen von der Formel (I) sind

   X₃ Si-O- (I)

   und das in der Polysiloxankette Einheiten der Formel (II) und Einheiten der Formel (III) aufweist

   -Si R₂-O- (II)

   -Si R (OR')-O- (III)

   wobei alle Reste R unabhängig voneinander jeweils einen Phenylrest oder einen Alkylrest mit 1 bis 4 C-Atomen bedeuten,
   alle Reste X unabhängig voneinander für R oder OH oder OR stehen, wobei mindestens einer aller vorhandenen Reste X für OH oder OR steht,
   R' für 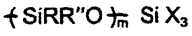 steht,
   alle Reste R" unabhängig voneinander für R oder für 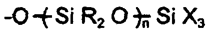 stehen und m und n jeweils für eine Zahl von 0 bis 200, vorzugsweise von 0 bis 50 stehen,
B) ein Reaktionsprodukt aus einem Diepoxid und einem Diamin oder ein Salz aus einem solchen Reaktionsprodukt und einer Säure.

Die erfindungsgemäßen Zusammensetzungen können, wenn gewünscht, auch zur Behandlung von Fasermaterialien, insbesondere textilen Flächengebilden, verwendet werden, welche keine oder nur geringe Mengen Wolle enthalten. Sie sind jedoch besonders geeignet zur Behandlung von textilen Flächengebilden, welche zu 50 bis 100 Gew% aus Wolle bestehen. Werden sie hierfür verwendet, kommen ihre Vorteile besonders gut zur Geltung. Die mit diesen Zusammensetzungen behandelten Wolletextilien besitzen nach Waschvorgängen ausgeprägt niedrigen Schrumpf, angenehm weichen Griff und geringe Neigung zum Verfilzen. Eine oxidative Vorbehandlung der Wolle, wie sie bei manchen Verfahren des Standes der Technik erforderlich ist, muß hierbei nicht durchgeführt werden. Als Flächengebilde, welche 50 - 100 Gew% Wolle enthalten, sind textile Flächengebilde wie Gewebe oder Gewirke bevorzugt, z.B. Flächengebilde für Bekleidungsartikel. Deren Behandlung mit erfindungsgemäßen Zusammensetzungen erfolgt vorzugsweise, indem man diese in Form einer wäßrigen Lösung oder Dispersion auf die Wollematerialien aufbringt und die Wollematerialien anschließend trocknet. Das Aufbringen kann nach bekannten, in der Textilveredlung üblichen Methoden erfolgen, z.B. mittels Foulardierung. Wenn gewünscht, können die erfindungsgemäßen Zusammensetzungen auch durch Sprühen aufgebracht werden. Dies ist aber weniger bevorzugt. In einer Reihe von Fällen ist es von Vorteil, nach dem Foulardieren und Trocknen noch eine Behandlung der ausgerüsteten Wollemateriaiien bei erhöhter Temperatur durchzuführen, um die auf der Wolle befindlichen Zusammensetzungen auszuhärten bzw. zu vernetzen. An Stelle einer Applikation der Zusammensetzung in Form einer wäßrigen Lösung oder Dispersion kann in einzelnen Fällen auch eine Applikation in reiner Form, d.h. Verwendung der Zusammensetzung ohne Zusatz von Wasser, oder als Lösung in einem organischen Lösungsmittel, in Betracht kommen. Diese beiden Methoden sind aber weniger bevorzugt. Allerdings kann es in bestimmten Fällen in Betracht kommen, nach einer dieser Methoden zu arbeiten, nämlich dann, wenn sich eine erfindungsgemäße Zusammensetzung, welche spezielle erwünschte Komponenten enthält, nicht in Form einer ausreichend stabilen wäßrigen Lösung oder Dispersion erhalten läßt. Im bevorzugten Fall jedoch werden erfindungsgemäße Zusammensetzungen in Form wäßriger Lösungen oder Dispersionen verwendet, d.h. sie enthalten außer den oben genannten Komponenten A und B noch Wasser als Komponente C.

Erfindungsgemäße Zusammensetzungen können, wenn gewünscht, auch mittels eines Beschichtungsverfahrens auf flächenhafte Fasermaterialien aufgebracht werden. Gegebenenfalls wird den Zusammensetzungen vor der Applikation auf die Fasermaterialien noch ein reaktives Silan hinzugefügt, das zwei oder mehr Hydroxi- oder Alkoxigruppen enthält.

Die textilen Flächengebilde mit 50 bis 100 Gew% Wolle können Wolle, z.B. herkömmliche Schafwolle, beliebiger Provenienz enthalten. Sie können vor oder nach der Behandlung mit findungsgemäßen Zusammensetzungen noch einer Plasmabehandlung nach bekannten Methoden unterzogen werden, um ihre Oberfläche physikalisch und/oder chemisch zu verändern. Durch eine solche Plasmabehandlung können in gewissen Fällen noch Effektsteigerungen erzielt werden. Falls eine Plasmabehandlung der Wolle enthaltenden Fasermaterialien überhaupt durchgeführt wird, so ist es bevorzugt, diese Plasmabehandlung vor dem Aufbringen einer erfindungsgemäßen Zusammensetzung vorzunehmen. Weiterhin ist es bevorzugt, mit einem Sauerstoff enthaltenden Plasma unter vermindertem Druck zu arbeiten.
Die Flächengebilde können ungefärbt vorliegen oder vor oder nach der Behandlung mit erfindungsgemäßen Zusammensetzungen gefärbt werden, vorzugsweise vor dieser Behandlung. Bestehen sie aus Fasermischungen, welche mindestens 50, aber weniger als 100 Gew% Wolle enthalten, so kann der nicht aus Wolle bestehende Anteil eine beliebige Faser sein, die üblicherweise in Mischungen mit Wolle verwendet wird.

Die Herstellung erfindungsgemäßer Zusammensetzungen kann nach verschiedenen Methoden erfolgen. Allerdings ist es im Einzelfall, je nach Art und Menge der gewählten Inhaltsstoffe, möglich, daß nicht alle unten beschriebenen Methoden angewandt werden können. Eine geeignete Methode besteht darin, die Komponenten A und B miteinander ohne Zusatz von Wasser zu vermischen, wobei weitere gewünschte Komponenten (außer Wasser) vor, während oder nach dem Vermischen zugesetzt werden können. Die so erhaltenen Zusammensetzungen können in reiner Form oder nach Lösen in einem organischen Lösungsmittel verwendet werden. Diese Methode ist jedoch weniger bevorzugt und sollte nur dann angewandt werden, wenn es auf Grund von Art und Menge der gewünschten Inhaltsstoffe nicht möglich ist, die Zusammensetzung in Form einer ausreichend stabilen wäßrigen Lösung oder Dispersion zu erhalten. Aber selbst für den Fall, daß keine wäßrigen Lösungen oder Dispersionen erfindungsgemäßer Zusammensetzungen erhalten werden können, die über längere Zeit stabil sind, existieren in einer Reihe von Fällen Möglichkeiten, die Verwendung solcher Zusammensetzungen in unverdünnter Form oder als Lösung in einem organischen Lösungsmittel zu umgehen. Zum einen kann man, wenn eine wäßrige Lösung oder Dispersion wenigstens für einige Stunden stabil ist, so vorgehen, daß man diese erst kurz vor der Anwendung zur Behandlung der textilen Fasermaterialien herstellt. Zum zweiten ist es möglich, zwei getrennte wäßrige Lösungen oder Dispersionen herzustellen, von denen eine die Komponente A und die andere die Komponente B enthält. Eine oder beide dieser Dispersionen oder Lösungen können dabei weitere Komponenten enthalten. Durch Vereinigen der beiden getrennt hergestellten Dispersionen oder Lösungen entstehen dann erfindungsgemäße Zusammensetzungen. Im Fall der Herstellung und Anwendung zweier getrennter wäßriger Lösungen oder Dispersionen kann so gearbeitet werden, daß diese und damit die Komponenten A und B nicht gleichzeitig, sondern nacheinander auf die Fasermaterialien aufgebracht werden, In diesem Fall liegen also die erfindungsgemäßen Zusammensetzungen vor ihrer Anwendung nicht als solche vor, sondern bilden sich erst auf dem Fasermaterial. Gegebenenfalls ist es bei dieser Variante ihrer Anwendung empfehlenswert, die erste der beiden wäßrigen Dispersionen oder Lösungen aus einem Bad aufzubringen, z.B. durch Foulardierung, und die zweite durch Sprühen, um zu vermeiden, daß durch eine Applikation aus einem zweiten Bad Anteile wieder ausgewaschen werden, die im ersten Bad appliziert wurden. Die Reihenfolge der Applikation bei dieser Arbeitsweise ist beliebig, es kann also entweder zuerst die wäßrige Lösung oder Dispersion aufgebracht werden, die Komponente A enthält oder die, welche Komponente B enthält.
Lassen sich mit erfindungsgemäßen Zusammensetzungen ausreichend stabile wäßrige Lösungen oder Dispersionen erhalten, wozu gegebenenfalls der Zusatz eines oder mehrerer Dispergatoren erforderlich sein kann, so kann man diese Lösungen oder Dispersionen nach bekannten Methoden herstellen. Welche dieser Methoden gewählt werden soll, hängt im Einzelfall von Art und Menge der gewünschten Inhaltsstoffe ab. Eine geeignete Methode ist z.B. die Herstellung eines Gemischs der Komponenten A und B und Lösen oder Dispergieren dieses Gemischs in Wasser, wobei gegebenenfalls entweder dem Wasser oder dem Gemisch vorher ein Dispergator zugesetzt wurde. Eine andere Methode besteht darin, zuerst eine wäßrige Lösung oder Dispersion einer der beiden Komponenten A oder B herzustellen und dieser Lösung oder Dispersion die andere Komponente hinzuzufügen, entweder in reiner Form oder in Form einer wäßrigen Lösung oder Dispersion dieser Komponente. Die Herstellung der Dispersionen oder Lösungen kann bei Raumtemperatur oder, falls erforderlich, bei etwas erhöhter Temperatur erfolgen. Die erfindungsgemäßen Zusammensetzungen, die vorzugsweise in Form wäßriger Lösungen oder Dispersionen vorliegen, bzw. die beiden getrennten wäßrigen Lösungen oder Dispersionen, die Komponente A bzw. Komponente B enthalten, werden vor ihrer Anwendung auf die gewünschte, in der Textilausrüstung übliche Gebrauchskonzentration eingestellt, um für die Anwendung geeignete Flottenkonzentrationen zu erhalten.

In vielen Fällen besteht eine bevorzugte Methode der Verwendung erfindungsgemäßer Zusammensetzungen darin, zwei getrennte wäßrige Dispersionen herzustellen, von denen die eine Komponente A und die andere Komponente B enthält. Diese Methode ist immer dann bevorzugt, wenn sich keine wäßrigen Dispersionen erhalten lassen, die sowohl Komponente A als auch Komponente B enthalten und die über längere Zeit ausreichend stabil sind. Die beiden getrennten wäßrigen Dispersionen werden in diesem Fall entweder getrennt nacheinander auf die Fasermaterialien aufgebracht oder erst kurz vor ihrer Anwendung für die Behandlung von Fasermaterialien vereinigt und gegebenenfalls mit Wasser auf die Konzentration verdünnt, die für die Textilausrüstung vorgesehen ist, z.B. so verdünnt, daß die Ausrüstflotte etwa 5 bis 25 g/l an Komponente A und 1 bis 15 g/l Komponente B enthält. Die beiden getrennt vorliegenden wäßrigen Dispersionen können jeweils weitere Bestandteile enthalten. Vielfach ist es günstig, wenn eine oder beide dieser Dispersionen ein kationisches oder nichtionogenes Tensid oder ein Gemisch solcher Tenside enthalten. Geeignete Tenside werden unten beschrieben.
Eine bevorzugte Ausführungsform besteht darin, das gewünschte Tensid oder Tensidgemisch (Komponente G) bei der Herstellung derjenigen wäßrigen Dispersion zu verwenden, welche Komponente A enthält; dies gilt für den Fall, daß 2 getrennte wäßrige Dispersionen hergestellt werden, von denen die eine Komponente A und die andere Komponente B enthält, und die erst kurz vor ihrer Verwendung miteinander vereinigt werden, In den Fällen, wo eine einzige wäßrige Dispersion, welche sowohl A als auch B enthält, ausreichend stabil ist, kann diese ebenfalls ein kationisches oder nichtionogenes Tensid (Komponente G) enthalten. Geeignet hierfür sind die gleichen Tenside, welche im Fall getrennter Dispersionen verwendet werden können.
Für den bevorzugten Fall, daß ein Tensid oder Tensidgemisch verwendet wird, enthält die Flotte, mit der die Fasermaterialien behandelt werden, dieses Tensid oder Tensidgemisch. Hierdurch kann vielfach eine erhöhte Stabilität bzw. Homogenität dieser Flotte bei Lagerung resultieren.

Erfindungsgemäße Zusammensetzungen müssen mindestens eine Komponente A und eine Komponente B der in Anspruch 1 angegebenen und unten näher erläuterten Art enthalten. Sie können jedoch noch weitere Komponenten der unten genannten Art und Wasser enthalten. Außerdem können noch zusätzliche Inhaltsstoffe enthalten sein, wie sie dem Fachmann für Textilausrüstung, insbesondere Wolleausrüstung, bekannt sind. Vorzugsweise enthälten erfindungsgemäße Zusammensetzungen keine Verbindungen mit Si-H-Bindungen. Auch in Komponente A sind vorzugsweise keine Si-H-Bindungen enthalten. Außerdem enthalten die erfindungsgemäßen Zusammensetzungen vorzugsweise keine Elemente außer Kohlenstoff, Wasserstoff, Sauerstoff, Stickstoff und Silicium mit Ausnahme der Metallsalze, die unten als Komponente F beschrieben werden.

Komponente A ist ein Organopolysiloxan der oben und in Anspruch 1 genannten Art. Es ist nicht vollständig linear, sondern verzweigt wegen der Anwesenheit von Einheiten der Formel (III):

-SiR(OR')-O- (III)

Es enthält also wegen einer oder mehrerer Verzweigungen drei oder mehr endständige Si-Atome. Alle vorhandenen Endgruppen entsprechen der Formel (I) X₃ Si-O-. Alle anwesenden Reste R stehen unabhängig voneinander jeweils für einen Phenylrest oder einen linearen oder verzweigten Alkylrest mit 1 bis 4 Kohlenstoffatomen. Alle Reste X stehen unabhängig voneinander für einen Rest R, eine OH-Gruppe oder einen Rest OR, wobei R die oben genannte Bedeutung besitzt. Mindestens einer aller vorhandenen Reste X muß jedoch für OH oder OR stehen. Hierdurch wird erreicht, daß das Organopolysiloxan weiter vernetzt werden kann. Vorzugsweise stehen in allen endständigen Gruppen X₃ Si-O- mindestens jeweils zwei der Reste X für einen Rest R.
Komponente A muß in der Polysiloxankette Einheiten der Formel (II) aufweisen:

-SiR₂-O- (II)

Sind auf Grund der Verzweigung mehrere längere Ketten vorhanden, so weist mindestens eine davon solche Einheiten auf, Einheiten der Formel (II) können aber auch in weiteren (Seiten-) Ketten vorliegen. R besitzt hierbei die oben genannte Bedeutung. Bevorzugt sind 80 bis 100 % aller in Komponente A anwesenden Reste R Methylgruppen.
Die Komponente A enthält neben Einheiten der Formel (II) noch Einheiten der Formel (III) in der Organopolysiloxankette.

-SiR (OR')-O- (III)

Es sind also Si-Atome anwesend, an die drei Sauerstoffatome gebunden sind. Hierdurch ergibt sich eine Verzweigung/Vernetzung der Organopolysiloxane. Die Komponente A ist jedoch noch zu weiterer Vernetzung befähigt, da mindestens in einer der Endgruppen -O-Si X₃ (Formel I) einer der Reste X für OH oder OR steht. Es können jedoch auch mehrere der anwesenden Reste X für OH oder OR stehen. Die weitere Vernetzung über diese OH- oder OR-Gruppen kann nach der Applikation der erfindungsgemäßen Zusammensetzung auf die textilen Flächengebilde erfolgen, z.B. durch eine Härtung bei erhöhter Temperatur und gegebenenfalls nach Hydrolyse, um endständige OR-Gruppen in OH-Gruppen umzuwandeln.
Die Anzahl der Einheiten der Formel (III), welche in Komponente A anwesend sind, kann in weiten Bereichen variiert werden. Sie läßt sich vor allem steuern durch Art und Menge der Ausgangsstoffe bei der Herstellung der Komponente A. Eine bekannte, dem Fachmann geläufige Methode zur Herstellung von Polysiloxanen, welche Si-Atome enthalten, an welche 3 Sauerstoffatome gebunden sind, besteht darin, ein Organopolysiloxan z.B. Polydimethylsiloxan, mit einem trifunktionellen Silan der Formel R-Si(OR¹)₃ unter Verwendung eines basischen Katalysators umzusetzen. Hierbei steht R¹ z.B. für einen Alkylrest. Übertragen auf die Herstellung von Komponente A bedeutet dies, daß ein Herstellungsverfahren darin bestehen kann, daß man ein Organopolysiloxan der Formel 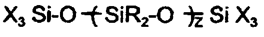 mit einem Silan der Formel R Si(OR')₃, der Formel R Si (OR')₂ (OR²) oder der Formel R Si (OR') (OR²)₂ umsetzt, wobei R² für einen Alkylrest, vorzugsweise Methylrest steht und z einen für Polysiloxane üblichen Wert besitzt. Durch das Mengenverhältnis von Organopolysiloxan : Silan läßt sich die Anzahl der in Komponente A eingebauten trifunktionellen Si-Atome steuern und damit die Anzahl der Einheiten der Formel (III).
In den Einheiten der Formel (III) besitzt R die oben genannte Bedeutung, vorzugsweise stehen 80 bis 100 % aller Reste R für eine Methylgruppe.
Der Rest R' in den Einheiten der Formel (III) steht für einen Rest der Formel 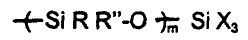 worin X und R die oben und in Anspruch 1 genannten Bedeutungen besitzen. m steht für eine Zahl von 0 bis 200, vorzugsweise von 0 bis 50. In einer Reihe von Fällen ist es ferner vorteilhaft, wenn m für eine Zahl von 1 bis 30 steht. Für den Fall, daß m nicht Null ist, enthält Komponente A einen oder mehrere Reste R". Alle anwesenden Reste R" stehen unabhängig voneinander für einen Rest R der genannten Art oder für einen Rest der Formel

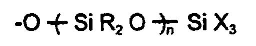

Im letzteren Fall weist Komponente A neben der Verzweigung, die bereits durch Anwesenheit von Einheiten der Formel (III) hervorgerufen wird, noch eine oder mehrere weitere Verzweigungen auf. Durch die Menge von Ausgangsverbindungen, welche einen Rest R" enthalten, kann in diesem Fall bei der Herstellung von Komponente A deren Verzweigungsgrad gesteuert werden. n steht in der oben für R" angegebenen Formel für eine Zahl von 0 bis 200, vorzugsweise von 0 bis 50.

Wie dem Fachmann auf dem Gebiet der Silikonchemie bekannt ist, entstehen bei der Synthese von Organopolysiloxanen Gemische von Produkten. Für die Komponente A, die ebenfalls solch ein Gemisch sein kann, bedeutet dies, daß nicht alle Polysiloxanmoleküle, aus denen Komponente A besteht, Einheiten der Formel (III) enthalten müssen. Es genügt, daß dies bei der Mehrzahl der Moleküle der Fall ist. Daneben können auch unverzweigte Polysiloxanmoleküle der Formel 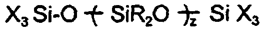 vorliegen, z.B. in Form nicht umgesetzter Ausgangsverbindungen, wobei z einen für Organopolysiloxane üblichen Wert annehmen kann.

Eine geeignete Methode zur Herstellung von Komponente A wurde oben bereits beschrieben. Als Komponente A geeignete Organopolysiloxane und deren Herstellung sind ferner beschrieben in der EP-A 738 747 und der EP-A 572 006. Ferner sind als Komponente A die aus der Literatur bekannten vernetzten kautschukartigen Silikone geeignet, sofern sie Einheiten der Formeln I, II und III aufweisen. Ein als Komponente A geeignetes Organopolysiloxan ist außerdem in dem Produkt CT 25 E der Firma Wacker GmbH, Deutschland, enthalten. CT 25 E, das daneben weitere Inhaltsstoffe enthält, kann zur Herstellung erfindungsgemäßer Zusammensetzungen verwendet werden, da es eine Verbindung enthält, welche Komponente A entspricht.

Vorzugsweise enthalten erfindungsgemäße Zusammensetzungen einen Anteil von 5 bis 25, besonders bevorzugt 10 bis 25, Gew%, der nicht flüssig und nicht fließfähig ist und der sowohl in Petroläther (Fraktion 40 - 60°C) als auch in Methylenchlorid und in Toluol unlöslich bzw. im wesentlichen unlöslich ist. Die hier genannten Gewichtsprozente beziehen sich auf die wasserfreie Zusammensetzung, die alle vorgesehenen Komponenten außer Wasser enthält. Der genannte nicht-flüssige Anteil ist auch nicht von öliger, sondern von kautschukartiger Konsistenz. Seine Menge ist ein Maß für die in Komponente A vorliegenden verzweigten Polysiloxanmoleküle bzw. ein Maß für die Anzahl von Einheiten der Formel (III). Die Anwesenheit eines solchen Anteils an verzweigten Polysiloxanketten die zu dem genannten Gehalt an nicht-flüssigem Anteil führt, ist vorteilhaft für die Verbesserung der Effekte bei der Behandlung von Textilien, welche 50 bis 100 Gew% Wolle enthalten, nämlich Reduzierung von Schrumpf und Verfilzungstendenz.

Neben Einheiten der Formeln (II) und (III), die in Komponente A enthalten sein müssen, kann Komponente A gegebenenfalls auch noch ein oder mehrere Si-Atome enthalten, an das bzw. die jeweils 4 Sauerstoffatome gebunden sind.

Komponente A enthält vorzugsweise keine Verbindungen mit Si-H-Bindungen, da solche Verbindungen Anlaß zu unerwünschten chemischen Reaktionen, z.B. Freisetzung von elementarem Wasserstoff, geben können. Vorzugsweise sind erfindungsgemäße Zusammensetzungen völlig frei von Verbindungen mit Si-H-Bindungen.

Neben den Organopolysiloxanen, welche Komponente A bilden, können erfindungsgemäße Zusammensetzungen jedoch weitere Polysiloxane enthalten. Diese sind ebenfalls vorzugsweise frei von Si-H-Bindungen. In einer Reihe von Fällen ist es vorteilhaft, wenn die Zusammensetzungen zusätzlich als Komponente D ein lineares, d.h. unverzweigtes Organopolysiloxan der Formel 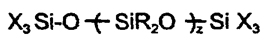 enthalten, z.B. ein Polydimethylsiloxan. Hierbei besitzen R und X die oben genannten Bedeutungen und z besitzt einen für Polysiloxane üblichen Wert, es ist aber in Komponente D nicht erforderlich, daß mindestens einer dieser Reste X für OH oder OR steht. Geeignet als Komponente D sind z.B. unsubstituierte oder endständig durch Hydroxygruppen substituierte Polydimethylsiloxane. Die zusätzliche Verwendung einer Komponente D kann dazu führen, daß der Griff der ausgerüsteten Fasermaterialien noch weicher wird. Ein ähnliches Ergebnis läßt sich erhalten, wenn erfindungsgemäße Zusammensetzungen an Stelle von Komponente D oder zusätzlich hierzu ein Organopolysiloxan enthalten, das Substituenten enthält, in welchen primäre und/oder sekundäre Aminogruppen vorliegen. An Stelle der zusätzlichen Verwendung von solchen aminofunktionellen Polysiloxanen lassen sich günstige Effekte auch dadurch erzielen, daß Komponente A der erfindungsgemäßen Zusammensetzungen selbst Reste mit Aminogruppen enthält. Bei einer bevorzugten Ausführungsform enthält Komponente A zusätzlich zu Einheiten der Formel (I), (II) und (III) noch Einheiten der Formel (IV).

-Si R (Y)-O- (IV)

Hierbei ist Y ein Rest der Formel (V), (VI) oder (VII) 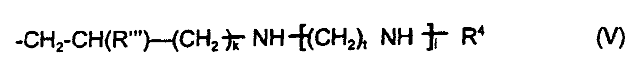 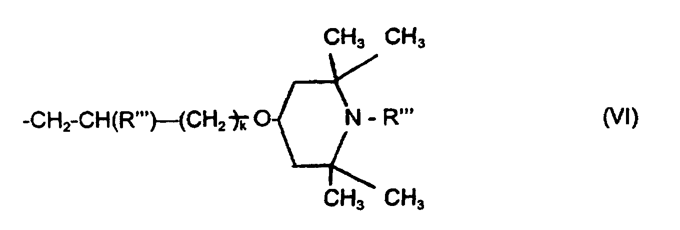 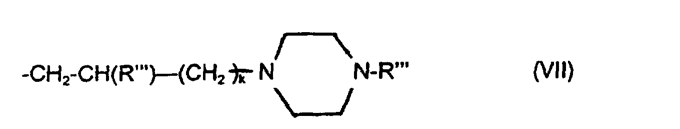 worin R''' für H oder CH₃ steht,
k eine Zahl von 0 bis 6, vorzugsweise 1,
t eine Zahl von 2 bis 8, vorzugsweise 2 bis 4,
und
l eine Zahl von 0 bis 3, vorzugsweise 0 oder 1,
bedeutet und
R⁴ für H, -CO-CH₃, 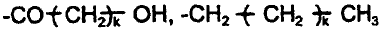 oder den Cyclohexylrest steht.

Auch in der oben beschriebenen Komponente D können Aminogruppen vorliegen, es kann z.B. ein Teil der Reste R, z.B. der Methylreste, in Komponente D durch Reste der oben genannten Formeln (V), (VI) oder (VII) ersetzt sein.
Sowohl in Komponente A als auch in Komponente D können an Stelle der genannten stickstoffhaltigen Reste der Formeln (V), (VI), (VII) oder zusätzlich hierzu weitere stickstoffhaltige Reste vorliegen, z.B. Reste der Formel (V), in denen ein oder mehrere an Stickstoff gebundene Wasserstoffatome durch Alkylgruppen, vorzugsweise kurzkettige, lineare oder verzweigte Alkylgruppen ersetzt sind. Komponente A und/oder D können daneben auch weitere Reste enthalten, in denen Amidogruppen, Amido- und endständige Hydroxygruppen, Piperidino-, Piperazino- oder Pyrazinogruppen vorliegen.

Für den oben genannten Fall, daß erfindungsgemäße Zusammensetzungen neben den Komponenten A und B noch zusätzlich ein oder mehrere Organopolysiloxane enthalten, in denen Substituenten mit Aminogruppen vorliegen, besitzen diese zusätzlich verwendeten Organopolysiloxane in einer bevorzugten Ausführungsform eine Struktur der Formel

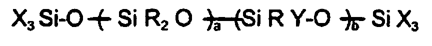

Hierbei haben X, R und Y die bereits erwähnten Bedeutungen. a besitzt hierbei für Polysiloxane übliche Werte, z.B. zwischen 50 und 3000 und a : b liegt im üblichen Bereich von beispielsweise 5:1 bis 500:1. Solche aminofunktionellen Polysiloxane sind handelsübliche Produkte und können unter anderem von der Firma Dow Coming bezogen werden.

In einer bevorzugten Ausführungsform liegt das Gewichtsverhältnis von Einheiten der Formel (II) in Komponente A zu Einheiten der Formel (III) in Komponente A im Bereich von 1:1 bis 10:1. Die in Komponente A anwesenden Einheiten der Formeln (II) und (III) und ggf. (IV) und gegebenenfalls zusätzlich anwesenden weiteren 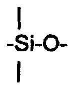 Einheiten können beliebig über die Polysiloxankette verteilt sein.

Neben den Komponenten A und D können erfindungsgemäße Zusammensetzungen noch weitere Polysiloxane enthalten, z.B. solche mit Polyoxyalkylenresten. Dies wird unten näher beschrieben. Sowohl in Komponente A als auch in Komponente D als auch in zusätzlich verwendeten Polysiloxanen können auch aromatische Reste vorliegen, welche direkt oder über Alkylenbrücken an Si-Atome gebunden sind, oder langkettige Alkylreste.
In einer bevorzugten Ausführungsform enthalten erfindungsgemäße Zusammensetzungen eine Komponente D der beschriebenen Art. Es ist vorteilhaft, wenn Komponente D in einer solchen Menge vorliegt, daß das Gewichtsverhältnis von Komponente A zu Komponente D im Bereich von 2:1 bis 1:20, besonders bevorzugt im Bereich von 1:1 bis 1:10, liegt. Komponente A ist in erfindungsgemäßen Zusammensetzungen vorzugsweise in einer Menge von 10 bis 30 Gew% enthalten. Dieser Wert bezieht sich auf das Gesamtgewicht der erfindungsgemäßen Zusammensetzung ohne Wasser und gilt für den Fall, daß die erfindungsgemäße Zusammensetzung eine Komponente D in einer solchen Menge enthält, daß die Komponenten A und D im Gewichtsverhältnis A:D von 1:1 bis 1:10 vorliegen. Dabei ist vorzugsweise der überwiegende Anteil von Komponente A von nicht-flüssiger Konsistenz und im wesentlichen unlöslich in Petroläther, Methylenchlorid und Toluol. Ein kleiner Anteil von A, nämlich ein Anteil mit geringer Anzahl von Einheiten der Formel (III) kann dagegen flüssig und in den genannten Lösungsmitteln löslich sein. Seine Anwesenheit erklärt sich durch die Tatsache, daß bei Polymersynthesen Produktgemische entstehen.

Der Nachweis, daß in einem Organopolysiloxan, das als Komponente A verwendet wird, sowohl Einheiten der Formel (II) als auch Einheiten der Formel (III) anwesend sind, kann mittels einer Kombination von Gaschromatographie (GC) und Massenspektrometrie (MS) geführt werden. Vor Durchführung dieses Nachweises werden anwesende Anteile an unvemetzten Polysiloxanen abgetrennt, also an Polysiloxanen, die keine Si-Atome enthalten, an die 3 Sauerstoffatome gebunden sind. Solche Anteile können anwesend sein auf Grund bewußter Zusätze (z.B. die erwähnte Komponente D) oder als Beimengungen, die bei der Herstellung vemetzter, also Einheiten der Formel (III) enthaltender Polysiloxane mit entstehen. Die Abtrennung unvernetzter Polysiloxananteile, welche keine Einheiten der Formel (III) enthalten, kann durch Extraktion mit Petroläther (Fraktion 40-60°C) erfolgen. Der in Petroläther unlösliche Rückstand, welcher Komponente A enthält, kann vor Durchführung von GC/MS nochmals mit alkoholischer Kalilauge behandelt werden, um eventuell noch eingeschlossene Anteile an unvemetzten Polysiloxanen abzutrennen. Der verbleibende Rückstand wird in einen Gaschromatographen unter Bedingungen (etwa 700°C unter Inertatmosphäre) gegeben, bei denen Pyrolyse stattfindet. Die Pyrolysebestandteile werden mittels MS untersucht. Hierdurch läßt sich nachweisen, ob neben difunktionellen Einheiten der Formel (II) auch trifunktionelle der Formel (III) im untersuchten Organopolysiloxan anwesend waren.
Der Nachweis, ob eine erfindungsgemäße Zusammensetzung neben Polysiloxanen, in welchen Einheiten der Formel (III) vorliegen, auch unvemetzte Polysiloxane, d.h. ohne Einheiten der Formel (III), enthält (z.B. Komponente D), kann gemäß den obigen Ausführungen mittels Petrolätherextraktion erfolgen. Daß der in Petroläther lösliche Anteil aus Polysiloxan besteht, das frei von Einheiten der Formel (III) ist (aber gegebenenfalls Aminogruppen in Seitenketten enthalten kann), kann mittels ²⁹Si-NMR-Spektroskopie bestätigt werden.
Wie oben und in Anspruch 1 angegeben, muß mindestens in einer der anwesenden Endgruppen -Si X₃ von Komponente A einer der Reste X für OH oder OR stehen. Dadurch wird erreicht, daß Komponente A weiter vernetzbar ist. Die Fähigkeit zur weiteren Vernetzung mit reaktiven Gruppen kann deshalb als Nachweis dafür dienen, daß mindestens eine Endgruppe einen Rest OH oder OR enthält. Gegebenenfalls muß vor der Vernetzung eine Hydrolyse durchgeführt werden, um aus einer OR-Gruppe eine OH-Gruppe zu bilden. Der analytische Nachweis der unten genannten Komponente B kann mittels chemischer Methoden oder mittels GC/MS nach einer Pyrolyse, gegebenenfalls auch mittels UV-Spektroskopie erfolgen.

Erfindungsgemäße Zusammensetzungen müssen neben der oben beschriebenen Komponente A noch mindestens eine Komponente B enthalten. Zwar läßt sich gegebenenfalls durch die Verwendung einer geeigneten Komponente A alleine bereits ein gewisses Effektniveau bezüglich Schrumpf und Verfilzungstendenz bei der Ausrüstung von Wolletextilien erreichen. Auch mit aus dem Stand der Technik für Wolleausrüstung bekannten Polysiloxanen werden gewisse Effekte erzielt. Es hat sich jedoch gezeigt, daß durch die Mitverwendung einer Komponente B diese Effekte noch gesteigert werden können, z.B. bezüglich ihrer Permanenz nach Waschvorgängen, oder aber, daß hierdurch gleiches Effektniveau bereits bei deutlich niedrigeren Mengen an Organopolysiloxan erreicht wird.

Komponente B ist das Reaktionsprodukt aus einem Diepoxid und einem Diamin oder ein Salz aus einem solchen Reaktionsprodukt und einer Säure. Vorzugsweise ist Komponente B ein solches Salz. Es ist möglich, bei der Herstellung erfindungsgemäßer Zusammensetzungen Komponente B bereits in Form eines solchen Salzes einzusetzen oder in Form des nicht mit Säure umgesetzten Reaktionsprodukts aus Diepoxid und Diamin. Im letzteren Fall wird vorzugsweise nach Herstellung der Zusammensetzung bzw. nach Herstellung einer wäßrigen Lösung oder Dispersion der Komponenten A und B eine Säure in solchen Mengen zugesetzt, daß die Zusammensetzung bzw. Lösung oder Dispersion einen sauren pH-Wert aufweist, z.B. im Bereich von 4 bis 6,5. Hiernach liegt Komponente B in Form eines Salzes vor, das teilweise oder vollständig diisoziiert sein kann.

Unter Diaminen werden in Zusammenhang mit der Komponente B Verbindungen verstanden, welche zwei primäre Aminogruppen (-NH₂-Gruppen) enthalten. Sie können jedoch zusätzlich noch sekundäre und/oder tertiäre Aminogruppen enthalten. Ein zur Herstellung einer Komponente B gut geeignetes Diamin im Sinn dieser Definition ist beispielsweise ein Diamin der Formel 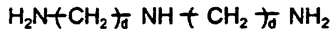 wobei jeder der beiden Indizies d unabhängig vom anderen für eine Zahl von 2 bis 8 steht. Ein geeignetes Produkt dieser Art ist Diethylentriamin (d=2). Weitere gut geeignete Diamine sind solche der Formel 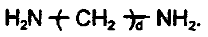 Besonders geeignet als Komponente B sind Reaktionsprodukte aus einem aromatischen Diepoxid und einem aliphatischen Diamin oder Salze, die aus einem solchen Reaktionsprodukt und einer Säure entstehen. Es können aber auch Reaktionsprodukte aus aromatischen Diaminen und Diepoxiden verwendet werden oder Reaktionsprodukte, bei deren Herstellung als Diaminkomponente ein Polysiloxan verwendet wurde, das zwei Reste mit je einer primären Aminogruppe enthält, z.B. ein lineares Polysiloxan, an dessen beiden Kettenenden die Struktureinheiten 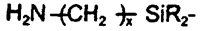 vorliegen, wobei x eine Zahl von 2 bis 4 ist.
Unter Diepoxiden werden Verbindungen mit zwei Epoxigruppen verstanden. Diese Verbindungen können monomer, oligomer oder polymer sein. Geeignet sind z.B. auch lineare Polysiloxane, die an den beiden Kettenenden je einen Rest mit einer Epoxidgruppe aufweisen, die über eine kurze Alkylenoxykette an das endständige Si-Atom gebunden ist. Besonders geeignet als Komponente B von erfindungsgemäßen Zusammensetzungen sind Reaktionsprodukte, die aus einem Diglycidylether eines zweiwertigen Phenols und einem Diamin der oben beschriebenen Art entstehen, oder Salze, die aus solchen Reaktionsprodukten und Säuren gebildet werden. Die hier genannten Diglycidylether von zweiwertigen Phenolen können einen oder mehrere aromatische Ringe aufweisen, also z.B. von der Formel
G-O-C₆H₄-O-G oder der Formel
G-O-C₆H₄-CH₂-C₆H₄-O-G oder der Formel
G-O-C₆H₄-C(CH₃)₂-C₆H₄-O-G sein,
worin C₆H₄ den zweiwertigen, von Benzol abgeleiteten Rest und G den Glycidylrest 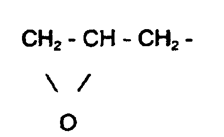 bedeutet. Die beiden freien Valenzen an den C₆H₄-Resten befinden sich bevorzugt in paraStellung.
Das Reaktionsprodukt aus Diepoxid und Diamin läßt sich nach bekannten Methoden herstellen, wobei eine Öffnung der Epoxidringe erfolgt und je nach Reaktionsbedingungen monomere, oligomere oder polymere Produkte entstehen. Das Reaktionsprodukt wird vorzugsweise nicht als solches als Komponente B verwendet, sondern in Form eines Salzes aus diesem Reaktionsprodukt und einer Säure. Bevorzugt werden zur Salzbildung organische Säuren verwendet, unter denen aliphatische Monocarbonsäuren mit 1 bis 4 Kohlenstoffatomen besonders gut geeignet sind.

Erfindungsgemäße Zusammensetzungen enthalten Komponente A und Komponente B bevorzugt in solchen Mengen, daß das Gewichtsverhältnis von A zu B im Bereich von 1:1 bis 15:1 liegt.

Neben den beschriebenen Komponenten A, B, C und D können erfindungsgemäße Zusammensetzungen noch weitere Komponenten enthalten. In vielen Fällen ist es von Vorteil, wenn sie als Komponente E zusätzlich Polyvinylalkohol (PVA) enthalten. Dieser kann als Schutzkolloid wirken. Die Menge an PVA, die in erfindungsgemäßen Zusammensetzungen vorliegt, beträgt vorzugsweise 0,5 bis 3 Gew%.

Weitere bevorzugte Ausführungsformen erfindungsgemäßer Zusammensetzungen bestehen darin, daß sie eine oder mehrere der folgenden Komponenten F und/oder G enthalten: Komponente F ist ein Metallsalz, das ausgewählt ist aus Carboxylaten, Sulfaten oder Halogeniden von Alkalimetallen, Erdalkalimetallen, Titan, Zinn oder Zink. Insbesondere die Salze von Ti, Sn und Zn können hierbei organische Gruppen enthalten, die an das Metall gebunden sind. Beispiele solcher Salze sind Dialkylzinndicarboxylate und Dialkyltitandicarboxylate. Komponente F kann auch ein Gemisch solcher Metallsalze sein.
Komponente G ist ein kationisches oder nichtionogenes Tensid oder ein Gemisch solcher Tenside. Anionische Tenside sind weniger bevorzugt.
Das Metallsalz oder das Gemisch von Metallsalzen (Komponente F) ist in erfindungsgemäßen Zusammensetzungen vorzugsweise in einer Menge von 0,1 bis 1 Gew% enthalten, wobei sich diese Angaben auf das elementare Metall und die wasserfreie Zusammensetzung beziehen. Es besitzt die Funktion eines Katalysators für die weitere Aushärtung bzw. Vernetzung von Komponente A, wobei diese Vernetzung zwischen Siloxanmolekülen untereinander oder zwischen Komponente A und Textilmaterial erfolgen kann. Die Vernetzung kann erreicht werden durch eine thermische Behandlung des mit einer erfindungsgemäßen Zusammensetzung ausgerüsteten Textilmaterials. Sie stellt eine bevorzugte Maßnahme nach Applikation der Zusammensetzung und Trocknung des Textilmaterials dar, weil es hierdurch in vielen Fällen gelingt, die Permanenz der niedrigen Schrumpf- bzw. Vefilzungstendenz bei Waschvorgängen zu verbessem.

Tenside werden erfindungsgemäßen Zusammensetzungen vorzugsweise zugesetzt, um stabile wäßrige Dispersionen der Zusammensetzungen herzustellen. Bei diesen wäßrigen Dispersionen kann es sich, wie oben ausgeführt, um Flotten handeln, die bereits auf die für Textilbehandlung übliche Gebrauchskonzentration verdünnt worden sind. In diesem Fall sind die nachfolgend für den Tensidgehalt angegebenen Konzentrationen auf Grund der Verdünnung entsprechend niedriger und liegen in dem für Textilausrüstungsflotten üblichen Bereich. Die erforderliche Menge an Tensid oder Tensidgemisch liegt hierbei im für Silikonemulsionen üblichen Bereich von etwa 1 bis 5 Gew%, bezogen auf wäßrige Dispersion. Im Einzelfall richtet sich deren Menge nach Art und Menge der Inhaltsstoffe der Dispersion.
Als Tenside gut geeignet sind nichtionische und kationische Dispergatoren, z.B. Fettalkoholaikoxilate, Fettsäurealkoxilate und quatemäre Ammoniumverbindungen. Eine besondere Klasse geeigneter Tenside sind Polydimethylsiloxane, in denen ein Teil der Methylgruppen durch Reste ersetzt sind, in welchen Polyoxyalkyleneinheiten vorliegen. Ferner können in diesen Polydimethylsiloxanen weitere Methylgruppen durch Aminogruppen enthaltende Reste ersetzt sein. Solche als Tenside geeigneten Polysiloxane sind beispielsweise beschrieben in der EP-A 578 144 und in Literaturstellen, die in dieser EP-A genannt sind.

In einer bevorzugten Ausführungsform erfindungsgemäßer Zusammensetzungen enthalten diese als Komponente G ein Tensid oder Tensidgemisch, das ausgewählt ist aus Verbindungen der Formel 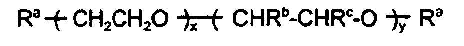 worin die einzelnen Einheiten -CH₂CH₂O- und -CHR^{b}-CHR^{c}-O- beliebig über die Molekülkette verteilt sein können, wobei
x eine Zahl von 2 bis 30, bevorzugt von 4 bis 20
y eine Zahl von 0 bis 10 und
x nicht kleiner als y ist,
wobei alle Reste R^{a} unabhängig voneinander für Wasserstoff, eine Alkyl- oder Alkenylgruppe mit 1 bis 18 Kohlenstoffatomen, eine Aminogruppe oder eine quatemierte Ammoniumgruppe, wobei jedoch keine direkte Sauerstoff-Stickstoff-Bindung anwesend ist, oder für eine Gruppe stehen, die sich von einem Poly- oder Oligodiorganosiloxan durch Entfernung eines an Si gebundenen Restes ableitet, und wobei einer der Reste R^{b} und R^{c} für H und der andere für -CH₃ steht.
Es handelt sich bei diesen Tensiden also um ethoxilierte (y = 0) oder um ethoxilierte/propoxilierte Verbindungen (y > 0). Hierbei ist die dispergierende Wirkung größer, wenn x ≥ y. Die Polyoxyethylen- und Polyoxypropyleneinheiten können für den Fall, daß y > 0 beliebig über die Molekülkette verteilt sein, es können also random- oder Blockcopolymere vorliegen. Die beiden Reste R^{a} an den Enden der Alkoxylatkette stehen unabhängig voneinander jeweils für Wasserstoff oder eine der oben und in Anspruch 13 genannten Gruppen. Jedoch ist, falls R^{a} für eine Amino- oder Ammoniumgruppe steht, das Stickstoffatom dieser Gruppe nicht direkt an ein Sauerstoffatom gebunden. Für den Fall, daß R^{a} für eine quatemierte Ammoniumgruppe steht, ist das zugehörige Anion bevorzugt ein Halogenid- oder Sulfatanion. Steht R^{a} für eine Aminooder eine quaternierte Ammoniumgruppe, so sind die zwei oder drei übrigen Substituenten am Stickstoffatom vorzugsweise ausgewählt aus Wasserstoff, kurzkettigen oder längerkettigen Alkylgruppen und ( CH₂CH₂O )ₓ H - Gruppen, wobei x eine Zahl von 2 bis 30 ist.
Als gut geeignet haben sich Tensidgemische erwiesen, welche ein modifiziertes Dimethylsiloxan enthalten, in dem eine oder mehrere Methylgruppen durch einen Rest ersetzt sind, der eine ethoxilierte/propoxilierte Gruppe aufweist und welche ferner einen oder mehrere ethoxilierte aliphatische Alkohole mit 8 bis 14 C-Atomen enthalten.

Erfindungsgemäße Zusammensetzungen eignen sich zur Behandlung von Fasermaterialien, insbesondere textilen Flächengebilden, welche 50 bis 100 Gew% Wolle enthalten. Durch Aufbringen der Zusammensetzungen und Trocknen der Textilien und vorzugsweise einer Aushärtung bei erhöhten Temperaturen, vorzugsweise im Bereich von 110 bis 180°C, wird der Schrumpf und die Verfilzungstendenz der Wolle deutlich reduziert. Die Verfilzungstendenz unbehandelter Wolle bei Waschvorgängen führt zu Nachteilen bezüglich Ästhetik und Tragegefühl bei Bekleidungsartikeln. Der Schrumpf der Wolle enthaltenden textilen Flächengebilde bei Waschvorgängen kann als Maß für die Verfilzungsneigung angesehen werden.
Es hat sich gezeigt, daß Zusammensetzungen, welche mindestens Komponente A und Komponente B enthalten, hervorragend geeignet sind, Schrumpf und Verfilzung von Wolle deutlich zu verringern, insbesondere dann, wenn nach dem Aufbringen der erfindungsgemäßen Zusammensetzung und Trocknen der Textilien noch ausgehärtet wird, um eine Vernetzung von Komponente A zu bewirken. Auf diese Weise erhält man Textilien mit sehr guten "wash-and-wear"-Eigenschaften. Die Zusammensetzungen werden hierzu vorzugsweise in einer solchen Menge auf die Textilien aufgebracht, daß sich auf den Textilien 3 bis 15 Gew% (bezogen auf Gesamtwicht des Textils nach einer Trocknung bei 110°C/10 min. und berechnet als wasserfreie Zusammensetzung) der Zusammensetzung befinden.

Die Erfindung wird nunmehr durch Ausführungsbeispiele veranschaulicht.
In diesen Beispielen wurde der Schrumpf der behandelten Textilien nach der unten beschriebenen Methode bestimmt und als Maß für die Tendenz zur Verfilzung der Wolle enthaltenden Textilien herangezogen: Je geringer der Schrumpf, desto geringer ist die Neigung zur Verfilzung, desto besser sind also die "wash-and-wear"-Eigenschaften. Außerdem wurde das Erscheinungsbild der Textilien beurteilt und mit der sog. "Monsanto-Note" charakterisiert. Die Monsanto-Note liefert eine Beurteilung des Erscheinungsbildes einer textilen Oberfläche; je höher die Note, desto besser ist die Qualität der Ware zu beurteilen. Bei stark verfilzter Ware wurde in den nachfolgenden Beispielen keine Monsanto-Note vergeben. In der Praxis wird eine Monsanto-Note von mindestens 3,0 als Grenze für eine gute Warenqualität bezüglich "washand-wear"-Eigenschaften angesehen. Die Monsanto-Note wird auf Grund des visuellen Erscheinungsbildes der Warenoberfläche vergeben.

### Beispiel 1 (nicht erfindungsgemäßes Vergleichsbeispiel)

Ein Gewebe aus 100 % rot eingefärbter Wolle, das durch vorhergehende Behandlung mit Ammoniak neutralisiert worden war, wurde in Wasser getaucht, auf 100 % Feuchtigkeitsaufnahme abgequetscht, bei 110°C 10 Minuten lang getrocknet und anschließend einer Temperaturbehandlung bei 160°C/5 Minuten unterworfen. Das so behandelte Gewebe wurde 3 mal mit Programm 5 A (gemäß IWS-Testmethode TM 31 des Internationalen Wollsekretariats) gewaschen und anschließend der Schrumpf an Hand der Dimensionsänderung (gemäß oben genannter TM 31) bestimmt.

### Beispiele 2 bis 7

Gewebe wie in Beispiel 1 wurden vor dem Trocknen statt mit Wasser in verschiedenen Behandlungsflüssigkeiten (Flotten) behandelt (Foulard), auf 100 % Flottenaufnahme abgequetscht und weiterbehandelt wie in Beispiel 1. 100 % Flottenaufnahme bedeutet, daß die Gewebe nach dem Abquetschen das doppelte Gewicht besaßen wie das trockene Gewebe vor Behandlung mit den Flotten. Dort, wo es auf Grund des Erscheinungsbildes sinnvoll war, wurde nach der Behandlung bei 160°C eine Monsanto-Note vergeben.

Die nachfolgenden Beispiele 2 bis 5 sind nichterfindungsgemäße Vergleichsbeispiele, die Beispiele 6 und 7 betreffen die Behandlung der Wollgewebe mit erfindungsgemäßen Zusammensetzungen.

Die für die einzelnen Behandlungsflotten verwendeten Produkte waren folgende:
a) = Polydimethylsiloxan, in dem ein Teil der Methylgruppen durch Aminogruppen enthaltende Reste substituiert war. Dieses Siloxan enthielt keine vernetzten Anteile, also keine Einheiten der Formel (III). Die Endgruppen der Polysiloxankette waren zum Teil OH-, zum Teil OCH₃-Gruppen.
b) = Organopolysiloxan mit Hydroxylendgruppen, mit Einheiten der Formel (II) und mit Einheiten der Formel (III) (Komponente A von Anspruch 1). Dieses Polysiloxan war in Petroläther (Fraktion 40 - 60°C), in CH₂Cl₂ und in Toluol unlöslich und enthielt keine Si-H-Bindungen.
c) Polydimethylsiloxan, löslich in Petroläther, das frei ist von Aminogruppen und von Si-H-Bindungen.
d) mit Essigsäure neutralisiertes Umsetzungsprodukt von Bisphenol A-diglycidether und einem aliphatischen Diamin der Formel 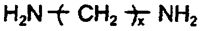 (Komponente B); das noch nicht mit Essigsäure neutralisierte Produkt ist erhältlich durch Umsetzung von

   E-CH₂-O-p-C₆ H₄-C(CH₃)₂-p-C₆H₄-O-CH₂-E

   mit 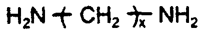 in einem in etwa äquimolaren Verhältnis, wobei E der einwertige von Ethylenoxid abgeleitete Rest ist. Es wird mit Essigsäure auf einen pH-Wert von etwa 5,0 - 6,5 eingestellt.
e) Polyvinylalkohol (Molgewicht etwa 50 000)
f) Fettalkoholpolyglykolether
g) quatemisiertes Ammoniumsalz
h) Dialkylzinndicarboxylat
i) Zinkstearat/Zinkchlorid (8:1)

Die Behandlungsflotten enthielten folgende Bestandteile (Mengen in g/l Behandlungsflotte)

| | Bestandteil | Menge |
|---|---|---|
| Beispiel 2 | b | 9 |
| | c | 27 |
| | e | 1,8 |
| | g | 0,6 |
| | h | 0,06 |
| Beispiel 3 | b | 13,5 |
| | c | 40,5 |
| | e | 2,7 |
| | g | 0,9 |
| | h | 0,09 |
| Beispiel 4 | b | 18 |
| | c | 54 |
| | e | 3,6 |
| | g | 1,2 |
| | h | 0,12 |
| Beispiel 5 | a | 45 |
| | f | 13,5 |
| Beispiel 6 | b | 13,5 |
| | c | 40,5 |
| | d | 1,6 |
| | e | 2,7 |
| | f | 0,4 |
| | g | 0,9 |
| | h | 0,09 |
| | i | 1,4 |
| Beispiel 7 | b | 13,5 |
| | c | 40,5 |
| | d | 5 |
| | e | 2,7 |
| | g | 0,9 |
| | h | 0,09 |

In der nachfolgenden Tabelle sind die für die einzelnen Beispiele gefundenen Schrumpfwerte und Monsanto-Noten (soweit welche vergeben wurden) aufgeführt. Die Schrumpfwerte sind in % Dimensionsänderung angegeben, wobei die Werte jeweils den Mittelwert des Schrumpfs in Ketten- und Schußrichtung darstellen. Dort wo bei der Monsanto ein ⊖ steht, war wegen des stark verfilzten Erscheinungsbildes der Oberfläche eine Note nicht sinnvoll.

**Tabelle**

| Beispiel | Schrumpf (%) | Monsanto-Note |
|---|---|---|
| 1 | 29 | ⊖ |
| 2 | 15 | ⊖ |
| 3 | 5,5 | 1,8 |
| 4 | 5 | 2,0 |
| 5 | 12,5 | ⊖ |
| 6 | 1 | 4,2 |
| 7 | 0,7 | 3,8 |

Man sieht, daß die Behandlung mit Zusammensetzungen, welche eine Komponente A, aber keine Komponente B enthalten (Beispiele 2, 3 und 4), bereits zu einer Verbesserung führt, wenn die Menge an vorvernetztem Polysiloxan erhöht wird. Durch Zusatz einer Komponente B (Beispiele 6 und 7) läßt sich jedoch noch eine deutliche Verbesserung erzielen. Die Behandlung mit einem nicht vorvemetzten Polysiloxan, das nicht der Komponente A entspricht (Beispiel 5), führt ebenfalls zu deutlich schlechteren Ergebnissen als die Behandlung mit erfindungsgemäßen Zusammensetzungen (Beispiele 6 und 7).

## Patentansprüche

1. Zusammensetzung, welche mindestens folgende Komponenten A und B enthält:
A) ein Organopolysiloxan, dessen endständige Gruppen von der Formel (I) sind
X₃Si-O- (I)
und das in der Polysiloxankette Einheiten der Formel (II) und Einheiten der Formel (III) aufweist
-Si R₂-O- (II)
-Si R (OR')-O- (III)
wobei alle Reste R unabhängig voneinander jeweils einen Phenylrest oder einen Alkylrest mit 1 bis 4 C-Atomen bedeuten,
alle Reste X unabhängig voneinander für R oder OH oder OR stehen, wobei mindestens einer aller vorhandenen Reste X für OH oder OR steht,
R' für 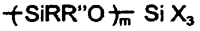 steht,
alle Reste R" unabhängig voneinander für R oder für 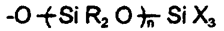 stehen und m und n jeweils für eine Zahl von 0 bis 200, vorzugsweise von 0 bis 50 stehen,
B) ein Reaktionsprodukt aus einem Diepoxid und einem Diamin oder ein Salz aus einem solchen Reaktionsprodukt und einer Säure.

2. Zusammensetzung nach Anspruch 1, **dadurch gekennzeichnet, daß** sie zusätzlich Wasser (Komponente C) enthält.

3. Zusammensetzung nach Anspruch 1 oder 2, **dadurch gekennzeichnet, daß** sie 5 bis 25 Gew% an einem nicht-flüssigen Anteil enthält, bezogen auf die wasserfreie Zusammensetzung, der sowohl in Petroläther (Fraktion 40 - 60°C) als auch in Methylenchlorid und Toluol unlöslich ist.

4. Zusammensetzung nach einem oder mehreren der Ansprüche 1 bis 3, **dadurch gekennzeichnet, daß** Komponente A zusätzlich Einheiten der Formel (IV)
-Si R (Y) -O- (IV)
enthält, wobei Y ein Rest der Formel (V), (VI) oder (VII) 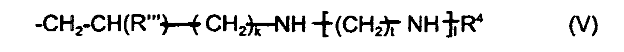 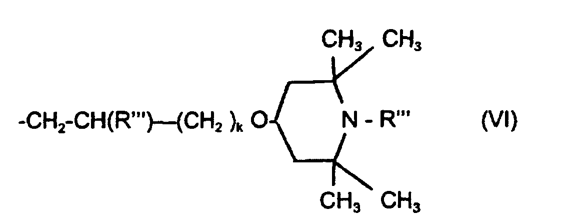 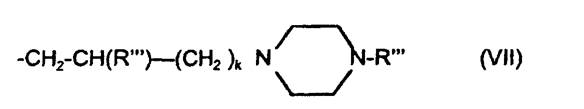 ist,
worin R''' für H oder CH₃ steht,
k eine Zahl von 0 bis 6, vorzugsweise 1,
t eine Zahl von 2 bis 8, vorzugsweise 2 bis 4,
und
l eine Zahl von 0 bis 3, vorzugsweise 0 oder 1,
bedeutet und
R⁴ für H, -CO-CH₃, 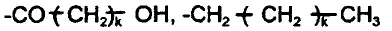 oder den Cyclohexylrest steht.

5. Zusammensetzung nach einem oder mehreren der Ansprüche 1 bis 4, **dadurch gekennzeichnet, daß** in Komponente A das Gewichtsverhältnis von Einheiten der Formel (II) zu Einheiten der Formel (III) im Bereich von 1:1 bis 10:1 liegt.

6. Zusammensetzung nach einem oder mehreren der Ansprüche 1 bis 5, **dadurch gekennzeichnet, daß** sie zusätzlich als Komponente D ein lineares Polydimethylsiloxan enthält, in dem gegebenenfalls ein Teil der Methylgruppen durch Reste der Formel (V), (VI) oder (VII) ersetzt ist.

7. Zusammensetzung nach einem oder mehreren der Ansprüche 1 bis 6, **dadurch gekennzeichnet, daß** 80 bis 100 % aller in Komponente A anwesender Reste R Methylgruppen sind.

8. Zusammensetzung nach einem oder mehreren der Ansprüche 1 bis 7, **dadurch gekennzeichnet, daß** sie keine Verbindungen mit Si-H-Bindungen enthält.

9. Zusammensetzung nach einem oder mehreren der Ansprüche 1 bis 8, **dadurch gekennzeichnet, daß** Komponente B ein Reaktionsprodukt aus einem aromatischen Diepoxid und einem aliphatischen Diamin oder ein Salz aus einem solchen Reaktionsprodukt und einer Säure ist.

10. Zusammensetzung nach einem oder mehreren der Ansprüche 1 bis 9, **dadurch gekennzeichnet, daß** Komponente B das Reaktionsprodukt aus einem Diglycidether eines zweiwertigen Phenols und einem Diamin der Formel 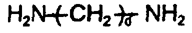 oder der Formel 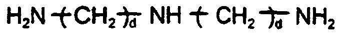 oder ein Salz aus einem solchen Reaktionsprodukt und einer Säure ist, wobei d eine Zahl von 2 bis 8 ist.

11. Zusammensetzung nach einem oder mehreren der Ansprüche 1 bis 10, **dadurch gekennzeichnet, daß** Komponente B ein Salz einer organischen Säure, vorzugsweise einer aliphatischen Monocarbonsäure mit 1 bis 4 C-Atomen, ist.

12. Zusammensetzung nach einem oder mehreren der Ansprüche 1 bis 11, **dadurch gekennzeichnet, daß** sie zusätzlich
Polyvinylalkohol (Komponente E)
ein Metallsalz (Komponente F)
und/oder
ein kationisches oder nichtionogenes Tensid oder ein Gemisch solcher Tenside (Komponente G) enthält, wobei das Metallsalz (Komponente F) ausgewählt ist aus Carboxylaten, Sulfaten oder Halogeniden von Alkalimetallen, Erdalkalimetallen, Titan, Zinn oder Zink.

13. Zusammensetzung nach Anspruch 12, **dadurch gekennzeichnet, daß** das Tensid oder Tensidgemisch ausgewählt ist aus Verbindungen der Formel 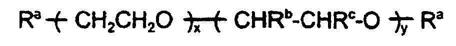 worin die einzelnen Einheiten -CH₂CH₂O- und -CHR^{b}-CHR^{c}-O- beliebig über die Molekülkette verteilt sein können, wobei
x eine Zahl von 2 bis 30, bevorzugt von 4 bis 20
y eine Zahl von 0 bis 10 und
x nicht kleiner als y ist,
wobei alle Reste R^{a} unabhängig voneinander für Wasserstoff, eine Alkyl- oder Alkenylgruppe mit 1 bis 18 Kohlenstoffatomen, eine Aminogruppe oder eine quaternierte Ammoniumgruppe, wobei jedoch keine direkte Sauerstoff-Stickstoff-Bindung anwesend ist, oder für eine Gruppe stehen, die sich von einem Diorganosiloxan durch Entfernung eines an Si gebundenen Restes ableitet, und wobei einer der Reste R^{b} und R^{c} für H und der andere für -CH₃ steht.

14. Zusammensetzung nach einem oder mehreren der Ansprüche 1 bis 13, **dadurch gekennzeichnet, daß** sie außer in Komponente F keine Elemente außer C, H, O, N und Si enthält.

15. Zusammensetzung nach einem oder mehreren der Ansprüche 1 bis 14, **dadurch gekennzeichnet, daß** das Gewichtsverhältnis von Komponente A zu Komponente B im Bereich von 1 : 1 bis 15 : 1 liegt.

16. Zusammensetzung nach einem oder mehreren der Ansprüche 6 bis 15, **dadurch gekennzeichnet, daß** das Gewichtsverhältnis von Komponente A zu Komponente D im Bereich von 2 : 1 bis 1 : 20, insbesondere 1:1 bis 1:10, liegt.

17. Zusammensetzung nach einem oder mehreren der Ansprüche 2 bis 16, **dadurch gekennzeichnet, daß** die Zusammensetzung eine wäßrige Lösung oder Dispersion ist.

18. Verwendung einer Zusammensetzung nach einem oder mehreren der Ansprüche 1 bis 17 zur Behandlung von Fasermaterialien, insbesondere textilen Flächengebilden, wobei die Komponente A und die Komponente B entweder gleichzeitig oder nacheinander auf die Fasermaterialien aufgebracht werden.

19. Verwendung nach Anspruch 18, **dadurch gekennzeichnet, daß** die Fasermaterialien zu 50 bis 100 Gew% aus Wolle bestehen.

## Claims

1. Composition comprising at least the following components A and B:
A) an organopolysiloxane whose terminal groups are of the formula (I)
X₃ Si-O- (I)
and which in the polysiloxane chain contains units of the formula (II) and units of the formula (III)
-Si R₂-O- (II)
-Si R (OR')-O- (II)
where all the R radicals are each independently a phenyl radical or an alkyl radical of 1 to 4 carbon atoms,
all the X radicals are independently R or OH or OR subject to the proviso that at least one of all the X radicals present is OH or OR,
R' is 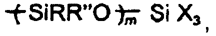 all the R" radicals are independently R or 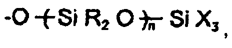 and m and n are each from 0 to 200, preferably from 0 to 50,
B) a reaction product of a diepoxide and a diamine or a salt of such a reaction product and an acid.

2. Composition according to claim 1, **characterized in that** it further comprises water (component C).

3. Composition according to claim 1 or 2, **characterized in that** it contains 5 to 25% by weight of a nonliquid fraction (based on the anhydrous composition) which is insoluble not only in petroleum ether (40-60°C fraction) but also in methylene chloride and toluene.

4. Composition according to one or more of claims 1 to 3, **characterized in that** component A additionally contains units of the formula (IV)
-Si R (Y) -O- (IV)
where Y is a radical of the formula (V), (VI) or (VII) 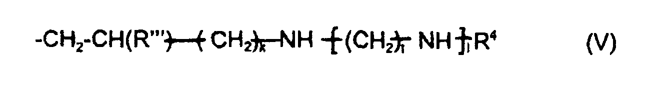 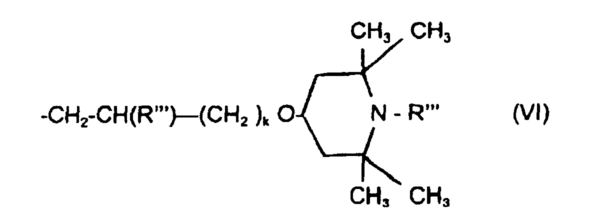 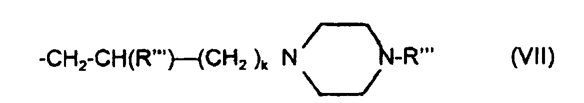 where R"' is H or CH₃,
k is from 0 to 6, preferably 1,
t is from 2 to 8, preferably from 2 to 4,
and
I is from 0 to 3, preferably 0 or 1,
and
R⁴ is H, -CO-CH₃, 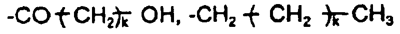 or cyclohexyl.

5. Composition according to one or more of claims 1 to 4, **characterized in that** the weight ratio of units of the formula (II) to units of the formula (III) in component A is within the range from 1:1 to 10:1.

6. Composition according to one or more of claims 1 to 5, **characterized in that** it further comprises as component D a linear polydimethylsiloxane in which optionally some of the methyl groups are replaced by radicals of the formula (V), (VI) or (VII).

7. Composition according to one or more of claims 1 to 6, **characterized in that** 80 to 100% of all R radicals present in component A are methyl groups.

8. Composition according to one or more of claims 1 to 7, **characterized in that** it does not include compounds having Si-H bonds.

9. Composition according to one or more of claims 1 to 8, **characterized in that** component B is a reaction product of an aromatic diepoxide and an aliphatic diamine or a salt of such a reaction product and an acid.

10. Composition according to one or more of claims 1 to 9, **characterized in that** component B is the reaction product of a diglycidyl ether of a dihydric phenol and a diamine of the formula 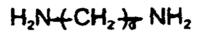 or of the formula 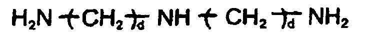 or a salt of such a reaction product and an acid, d being from 2 to 8.

11. Composition according to one or more of claims 1 to 10, **characterized in that** component B is a salt of an organic acid, preferably of an aliphatic monocarboxylic acid having 1 to 4 carbon atoms.

12. Composition according to one or more of claims 1 to 11, **characterized in that** it further comprises polyvinyl alcohol (component E)
a metal salt (component F)
and/or
a cationic or nonionic surfactant or a mixture of such surfactants (component G), the metal salt (component F) being selected from carboxylates, sulfates or halides of alkali metals, alkaline earth metals, titanium, tin or zinc.

13. Composition according to claim 12, **characterized in that** the surfactant or surfactant mixture is selected from the compounds of the formula 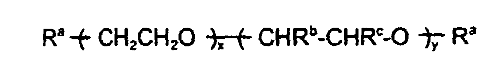 where the individual -CH₂CH₂-O- and -CHR^{b}-CHR^{c}-O- units may be distributed along the molecular chain in any desired pattern and
x is from 2 to 30, preferably from 4 to 20
y is from 0 to 10 and
x is not less than y,
and all the R^{a} radicals are independently hydrogen, an alkyl or alkenyl group of 1 to 18 carbon atoms, an amino group or a quaternized ammonium group where, however, no direct oxygen-nitrogen bond is present, or a group derived by removal of an Si- attached radical from a diorganosiloxane and one of R^{b} and R^{c} is H and the other is - CH₃.

14. Composition according to one or more of claims 1 to 13, **characterized in that** apart from in component F it contains no elements other than carbon, hydrogen, oxygen, nitrogen and silicon.

15. Composition according to one or more of claims 1 to 14, **characterized in that** the weight ratio of component A to component B is within the range from 1:1 to 15:1.

16. Composition according to one or more of claims 6 to 15, **characterized in that** the weight ratio of component A to component D is within the range from 2:1 to 1:20, especially 1:1 to 1:10.

17. Composition according to one or more of claims 2 to 16, **characterized in that** the composition is an aqueous solution or dispersion.

18. Use of a composition according to one or more of claims 1 to 17 for treating fiber materials, especially textile sheet materials, by applying component A and component B to the fiber materials either simultaneously or in succession.

19. Use according to claim 18, **characterized in that** the fiber materials are 50 to 100% by weight wool.

## Revendications

1. Composition contenant au moins les composants A et B ci-dessous :
A) un organopolysiloxane, dont les groupes terminaux appartiennent à la formule (I)
X₃Si-O- (I)
et qui présente des unités de la formule (II) et des unités de la formule (III) dans la chaîne de polysiloxane
SiR₂-O- (II)
SiR(OR')-O- (III)
où tous les radicaux R désignent, indépendamment l'un de l'autre, un radical phényle ou un radical alkyle chacun avec de 1 à 4 atomes de carbone,
tous les radicaux X représentent, indépendamment l'un de l'autre, R ou OH ou OR, où au moins un de tous les radicaux X présents représente OH ou OR,
R' représente -(SiRR"O)ₘ-SiX₃,
tous les radicaux R" représentent, indépendamment l'un de l'autre, R ou -O-(SiR₂O)ₙ-SiX₃, et où m et n représentent chacun un nombre d'une valeur allant de 0 à 200, de préférence de 0 à 50,
B) le produit d'une réaction entre un diépoxyde et d'une diamine ou le sel d'un produit de réaction de ce type et d'un acide.

2. Composition selon la revendication 1, **caractérisée en ce qu'**elle contient aussi de l'eau (composant C).

3. Composition selon la revendication 1 ou 2, **caractérisée en ce qu'**elle contient une partie non-liquide dans une proportion de 5 à 25 % en poids, par rapport à la composition anhydre, qui est insoluble aussi bien dans l'éther de pétrole (fraction 40 - 60°C) que dans le chlorure de méthylène et le toluène.

4. Composition selon une ou plusieurs des revendications 1 à 3, **caractérisée en ce que** le composant A contient en plus des unités de la formule (IV)
-SiR(Y)-O- (IV)
où Y représente un radical de la formule (V), (VI) ou (VII)
-CH₂-CH(R''')-(CH₂)ₖ-NH-[(CH₂)ₜ-NH-]₁-R⁴ (V) 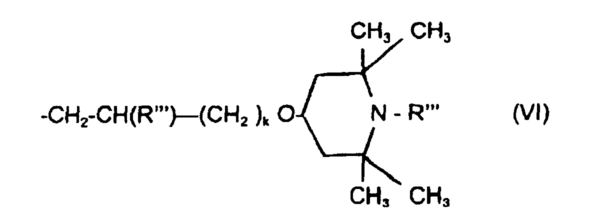 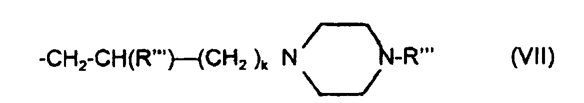
où R''' représente H ou CH₃,
k représente un nombre d'une valeur comprise entre 0 et 6, de préférence 1,
t représente un nombre d'une valeur comprise entre 2 et 8, de préférence 2 à 4,
et
l représente un nombre d'une valeur comprise entre 0 et 3, de préférence 0 ou 1,
et
R⁴ représente H, -CO-CH₃, -CO-(CH₂)ₖ-OH, -CH₂-(CH₂)ₖ-CH₃ ou le radical cyclohexyle.

5. Composition selon une ou plusieurs des revendications 1 à 4, **caractérisée en ce que** dans le composant (A) la proportion du poids des unités de la formule (II) à celui des unités de la formule (III) est située dans la plage de 1 : 1 à 10 : 1.

6. Composition selon une ou plusieurs des revendications 1 à 5, **caractérisée en ce qu'**elle contient en plus un polydiméthylsiloxane linéaire comme composant D, dans lequel une partie des groupes de méthyle est, le cas échéant, remplacée par des radicaux des formules (V), (VI) ou (VII).

7. Composition selon une ou plusieurs des revendications 1 à 6, **caractérisée en ce que** de 80 à 100 % de tous les radicaux R présents dans le composant A sont des groupes de méthyle.

8. Composition selon une ou plusieurs des revendications 1 à 7, **caractérisée en ce qu'**elle ne contient aucun composé comprenant des liaisons Si-H.

9. Composition selon une ou plusieurs des revendications 1 à 8, **caractérisée en ce que** le composant B est constitué par le produit d'une réaction entre un diépoxyde aromatique et une diamine aliphatique ou par le sel d'un produit de réaction de ce type et d'un acide.

10. Composition selon une ou plusieurs des revendications 1 à 9, **caractérisée en ce que** le composant B est constitué par le produit de la réaction d'un éther diglycidique d'un phénol bivalent et d'une diamine répondant à la formule
H₂N-(-CH₂-)_{d}-NH₂
ou à la formule
H₂N-(-CH₂-)_{d}-NH-(-CH₂-)_{d}-NH₂
ou du sel d'un produit de réaction de ce type et d'un acide, où d est un nombre d'une valeur comprise entre 2 et 8.

11. Composition selon une ou plusieurs des revendications 1 à 10, **caractérisée en ce que** le composant B est constitué d'un sel d'un acide organique, de préférence un acide monocarboxylique aliphatique avec de 1 à 4 atomes de carbone.

12. Composition selon une ou plusieurs des revendications 1 à 11, **caractérisée en ce qu'**elle contient en plus
de l'alcool polyvinylique (composant E)
un sel de métal (composant F)
et/ou
un agent de surface cationique ou non-ionique, ou un mélange d'agents de surface de ce type (composant G),
où le sel de métal (composant F) est choisi parmi les carboxylates, les sulfates ou les halogénures de métaux alcalins, de métaux alcalino-terreux, du titane, de l'étain ou du zinc.

13. Composition selon la revendication 12, **caractérisée en ce que** l'agent de surface, ou le mélange d'agents de surface, est choisi parmi des composés répondant à la formule
R^{a}- (-CH₂CH₂O-)ₓ- (CHR^{b}-CHR^{c}-O-)_{y}-R^{a}
où les unités individuelles -CH₂CH₂O- et -CHR^{b}-CHR^{c}-O- peuvent être réparties sur la chaîne de molécules dans n'importe quel ordre, où x est un nombre d'une valeur comprise entre 2 et 30, de préférence entre 4 et 20 y est un nombre d'une valeur comprise entre 0 et 10 et x n'est pas plus petit que y, où tous les radicaux R^{a} représentent, indépendamment l'un de l'autre, un atome d'hydrogène, un groupe alkyle ou alcènyle avec de 1 à 18 atomes de carbone, un groupe aminé ou un groupe d'ammonium quaternisé, où néanmoins aucune liaison directe oxygène-azote n'est présente, ou un groupe dérivé du diorganosiloxane par élimination d'un radical lié à Si, et où un des radicaux R^{b} et R^{c} représente H et l'autre CH₃.

14. Composition selon une ou plusieurs des revendications 1 à 13, **caractérisée en ce qu'**à part les éléments contenus dans le composant F elle ne contient aucun élément autre que C, H, O, N et Si.

15. Composition selon une ou plusieurs des revendications 1 à 14, **caractérisée en ce que** le rapport du poids du composant A à celui du composant B est situé dans la plage de 1 : 1 à 15 : 1.

16. Composition selon une ou plusieurs des revendications 6 à 15, **caractérisée en ce que** le rapport du poids du composant A à celui du composant D est situé dans la plage de 2 : 1 à 1 : 20, particulièrement de 1 : 1 à 1 : 10.

17. Composition selon une ou plusieurs des revendications 2 à 16, **caractérisée en ce que** la composition est une solution ou une dispersion aqueuse.

18. Utilisation d'une composition selon une ou plusieurs des revendications 1 à 17 pour le traitement de matériaux fibreux, en particulier les surfaces textiles, où le composant A et le composant B sont appliqués sur les matériaux fibreux soit simultanément, soit l'un à la suite de l'autre.

19. Utilisation selon la revendication 18, **caractérisée en ce que** les matériaux fibreux sont composés de laine dans une proportion de 50 à 100 % en poids.
